# EUROPEAN PATENT APPLICATION

(11) **EP 4 507 247 A1**
(43) Date of publication of application: **12.02.2025**
(21) Application number: 23886060.5
(22) Date of filing: 11.10.2023
(51) Int. Cl.: H04L 9/32, H04L 9/08, H01M 10/42

(54) **ENERGY STORAGE SYSTEM AND COMMUNICATION METHOD THEREFOR**

(30) Priority: 04.11.2022 KR 20220146300; 25.09.2023 KR 20230127944
(71) Applicant: LG Energy Solution, Ltd., Seoul 07335 (KR)
(72) Inventor: CHOI, Young, Daejeon 34122 (KR)
(74) Representative: Plasseraud IP
(86) International application number: PCT/KR2023/015631
(87) International publication number: WO 2024/096363

(57) **Abstract**

The present invention presents an energy storage system performing operations of transmitting battery cell information including voltage information about all battery cells from a BMS to an upper-level controller, storing voltage information about any N battery cells among all battery cells managed by the BMS, transmitting the number N of the stored battery cells to the upper-level controller, generating, by the upper-level controller, authentication key information using a value of the number N of the battery cells about which the voltage information is stored, generating a first authentication key using the battery cell information and the authentication key information, transmitting the first authentication key and the authentication key information to the BMS, generating, by the BMS, a second authentication key using the number N of the battery cells about which the voltage information is stored and the authentication key information, and determining authenticity of a control command from the upper-level controller by comparing the first authentication key with the second authentication key, and a communication method thereof.

## Description

### TECHNICAL FIELD

The present invention relates to an energy storage system, and particularly to an energy storage system capable of secure communication and a communication method thereof.

### BACKGROUND ART

As problems such as environmental destruction and natural resource depletion increase, systems capable of storing electric power and efficiently utilizing the stored electric power increasingly draw attention. In addition, interest in renewable energy that does not cause pollution in a process of generating electric power is also increasing. An energy storage system (ESS) is a system that links renewable energy, power storing batteries, and existing grid power, and much research and development thereon are being conducted in line with today's environmental changes. That is, the ESS is a device that improves power use efficiency by storing generated electricity in a storage device such as a battery and supplying the electricity when electric power is needed. Therefore, the ESS is equipped with a battery that stores electricity and apparatuses that efficiently manage and control the battery.

The ESS may include a plurality of batteries to store electric power, and the ESS may include at least one battery bank. In addition, each battery bank may include a plurality of battery racks, and each of the plurality of battery racks may include a plurality of battery modules. Further, each battery module includes a plurality of battery cells. That is, a plurality of battery cells may be bundled to form one battery module, a plurality of battery modules may be bundled to form one battery rack, a plurality of battery racks may be bundled to form one battery bank, and at least one battery bank may form the ESS.

For the ESS, it is important to efficiently manage various matters such as battery charging, discharging, and cell balancing. By efficiently managing the batteries, the lifespan of the batteries may be extended and electric power may be stably provided to loads. For this purpose, the ESS may be equipped with a battery management system (BMS). The BMS monitors voltage, current, and temperature of batteries and maintains and manage the batteries in optimal condition. In addition, the BMS manages a battery system including the batteries and peripheral devices of the batteries, such as predicting battery replacement times and detecting battery problems in advance. This BMS may be provided in each of the battery bank, battery rack, and battery module. That is, the battery bank, battery rack, and battery module include a bank BMS (BBMS), a rack BMS (RBMS), and a module BMS (MBMS), respectively. In addition, the ESS includes a battery system controller (BSC) that is the uppermost-level controller that controls the entire ESS. Therefore, in the ESS, a hierarchical battery management system successively leading to the BSC, the BBMS, the RBMS, and the MBMS is implemented. For example, control commands from the BSC are transmitted to the BBMS, the RBMS, and the MBMS to manage the batteries.

Meanwhile, various data collected by the BMS for various research and development may be stored on a remote central server or the like. That is, for the ESS, there are increasing cases where its battery control controller, such as BSC is exposed to the public Internet network for remote control, remote monitoring, and the like. However, when the controller is exposed, the ESS has security vulnerabilities such as malware infection and attacks from hackers. Further, due to the nature of the ESS that handles huge amounts of electrical energy, intimidation or arbitrary control by hackers may cause significant physical damage. The aforementioned problems may be avoided by applying encryption techniques to communication between the controller and a lower-level BMS. However, encrypting the entire communication requires a lot of computing operations, which puts a large burden on a battery monitoring IC (BMIC), which uses relatively lower computing power than a personal computer (PC).

In connection therewith, Patent Document 1 presents a battery pack with equipped with a wireless communication module and discloses a technology for authenticating a connected external electronic device and a battery pack by generating an authentication number for the battery pack, and Patent Document 2 discloses a battery system that makes mutual authentication between a master BMS and a slave BMS using an authentication key.

Further, Patent Document 3 discloses a battery management system that generates an authentication code when transmitting a data packet to an external device and transmits battery measurement data together with the authentication code, and Patent Document 4 discloses a method for generating a secret key including generating a first secret key using a voltage measured in a battery and transmitting the first secret key to an external device, receiving a second secret key generated using the first secret key from the external device, and generating a final secret key through an operation using the first secret key and the second secret key.

However, in the above-described related arts, a method for verifying the authenticity of a control command by checking an authentication key for transmission of control commands and the like between a battery management device and an upper-level controller is not presented and the entire data is encrypted in generating the authentication key and encrypting data, and thus there is a problem of not using computing resources efficiently.

The relates arts are as follows.
Patent Document 1: KR 10-2018-0056460 A
Patent Document 2: KR 10-2014-0019629 A
Patent Document 3: KR 10-2021-0051462 A.

### DISCLOSURE OF THE INVENTION

### TECHNICAL PROBLEM

The present invention provides an energy storage system capable of secure communication between a controller and a lower-level BMS and a communication method thereof.

The present invention provides an energy storage system that determines the authenticity of a control command from a controller by generating first and second authentication keys in the controller and a lower-level BMS, respectively, and comparing the authentication keys, and a communication method thereof.

In addition, the present invention provides a communication method between a controller and a BMS that generates an authentication key by efficiently using computing resources and uses the generated authentication key.

### TECHNICAL SOLUTION

An energy storage system according to one embodiment of the present invention includes a plurality of battery management systems (BMS) each managing a plurality of battery cells and an upper-level controller transmitting a predetermined control command to the plurality of BMSs, in which the upper-level controller generates authentication key information and a first authentication key using battery cell information provided from the BMSs, and the BMS generates a second authentication key using the authentication key information from the upper-level controller, and then determines authenticity of a control command from the upper-level controller by comparing the first and second authentication keys.

The BMS may provide, to the upper-level controller, battery cell voltage information on any N battery cells among all battery cells managed by the BMS together with the battery cell information, the upper-level controller may generate the authentication key information using the value of the number N of the information-stored battery cells and then generate the first authentication key using the battery cell information and the authentication key information, and the BMS may generate the second authentication key using the value of the number N of the information-stored battery cells and the received authentication key information.

The upper-level controller may include a communication unit that receives battery cell information including voltage information about all battery cells controlled by at least one BMS among the plurality of BMSs and voltage information about any N battery cells and transmits the generated authentication key information and first authentication key to the BMS, an authentication key information generation unit that generates the authentication key information from a value of the number N about which the voltage information is stored and the received battery cell information; and a first authentication key generation unit that generates the first authentication key using the battery cell information and the authentication key information.

The authentication key information generation unit may generate the authentication key information including any integer P satisfying 0 < P ≤ _N and any integer I satisfying 0 < P+(I+1) ≤ _N.

The first authentication key generation unit may generate the first authentication key by generating a first battery cell voltage sum value by adding up voltages of a predetermined number of battery cells selected from all the battery cell information using the authentication key information, adding an ID of the BMS to the first battery cell voltage sum value, and then performing a crc16 hash operation.

The first battery cell voltage sum value may be generated by adding up voltages from a P+0th battery cell to a P+Ith battery cell from the battery cell information. Here, P is any integer satisfying 0 < P ≤ _N, I is any integer satisfying 0 < P+(I+1) ≤ _N, and N is the number of the information-stored battery cells.

The BMS may include a memory unit that stores voltage information about any N battery cells among all battery cells managed by the BMS, a communication unit that transmits, to the upper-level controller, the battery cell information including voltage information about all battery cells managed by the BMS and a value of the number N of the battery cells about which the voltage information is stored and receives the authentication key information and the first authentication key from the upper-level controller, a second authentication key generation unit that generates a second authentication key from the authentication key information and the value of the number N of the battery cells about which the voltage information is stored, an authentication key comparison unit that compares the first and second authentication keys, and a control unit that determines the authenticity of the control command from the upper-level controller according to a comparison result of the authentication key comparison unit.

The second authentication key generation unit may generate the second authentication key by generating a second cell voltage sum value by adding up voltages of a predetermined number of battery cells selected from any battery cell information using the authentication key information, adding an ID of the BMS to the second cell voltage sum value, and then performing a crc16 hash operation.

The second cell voltage sum value may be generated by adding up voltages from a P+0th battery cell to a P+Ith battery cell from the battery cell information. Here, P is any integer satisfying 0 < P ≤ _N, I is any integer satisfying 0 < P+(I+1) ≤ _N, and N is the number of the information-stored battery cells.

A communication method of an energy storage system according to another embodiment of the present invention includes receiving, by an upper-level controller, battery cell information including voltage information about any battery cells from a BMS, generating, by the upper-level controller, authentication key information and a first authentication key using the battery cell information including the voltage information about any battery cells, receiving, by the BMS, the authentication key information from the upper-level controller to generate a second authentication key and comparing the second authentication key with the first authentication key; and performing, by the BMS, a control command from the upper-level controller according to a comparison result of the first authentication key and the second authentication key.

The authentication key information may include any integer P satisfying 0 < P ≤ _N and any integer I satisfying 0 < P+(I+1) ≤ _N.

The first authentication key may be generated by generating a first battery cell voltage sum value by adding up voltages of a predetermined number of battery cells selected from all the battery cell information using the authentication key information, adding an ID of the BMS to the first battery cell voltage sum value, and then performing a crc16 hash operation.

The first battery cell voltage sum value may be generated by adding up voltages from a P+0th battery cell to a P+Ith battery cell from the battery cell information. Here, P is any integer satisfying 0 < P ≤ _N, I is any integer satisfying 0 < P+(I+1) ≤ _N, and N is the number of the information-stored battery cells.

The second authentication key may be generated by generating a second cell voltage sum value by adding up voltages of a predetermined number of battery cells selected from any battery cell information using the authentication key information, adding an ID of the BMS to the second cell voltage sum value, and then performing a crc16 hash operation.

The second cell voltage sum value may be generated by adding up voltages from a P+0^{th} battery cell to a P+Ith battery cell from the battery cell information. Here, P is any integer satisfying 0 < P ≤ _N, I is any integer satisfying 0 < P+(I+1) ≤ _N, and N is the number of the information-stored battery cells.

According to another embodiment of the present invention, there is provided a communication method of an energy storage system, the communication method comprising transmitting battery cell information including voltage information about all battery cells from a BMS to an upper-level controller, storing voltage information about any N battery cells among all battery cells managed by the BMS, transmitting the number N of the stored battery cells to the upper-level controller, generating, by the upper-level controller, authentication key information using a value of the number N of the battery cells about which the voltage information is stored, generating a first authentication key using the battery cell information and the authentication key information, transmitting the first authentication key and the authentication key information to the BMS, generating, by the BMS, a second authentication key using the number N of the battery cells about which the voltage information is stored and the authentication key information, and determining authenticity of a control command from the upper-level controller by comparing the first authentication key with the second authentication key.

### ADVANTAGEOUS EFFECTS

In the present invention, an upper-level controller generates authentication key information and a first authentication key using battery cell information provided from a battery management system (BMS), and when the authentication key information and the first authentication key are provided to the BMS, the BMS generates a second authentication key using the authentication key information and then determines the authenticity of a control command from the upper-level controller by comparing the first and second authentication keys. In this case, when the BMS provides the battery cell information to the upper-level controller, the BMS stores battery cell voltage information about any N battery cells among all battery cells managed by the BMS in a memory unit and provides the battery cell voltage information to the upper-level controller, and the upper-level controller generates predetermined authentication key information using the number value of the information-stored battery cells. In addition, the upper-level controller generates the first authentication key using the battery cell information and the predetermined authentication key information, and the BMS generates the second authentication key using the number value of the information-stored battery cells and the received authentication key information.

As described above, secure communication between the BMS and the controller can be made by comparing the first and second authentication keys generated by the upper-level controller and the lower-level BMS, respectively, and determining the authenticity of the control command from the controller. In addition, since secure communication can be made with a small number of operations, operations can also be conducted using a battery monitoring IC (BMIC).

### BRIEF DESCRIPTION OF THE DRAWINGS

FIG. 1 is a block diagram for describing a configuration of an energy storage system according to one embodiment of the present invention.
FIG. 2 is a block diagram for describing a configuration of a battery management system (BMS) that is one component of an energy storage system according to one embodiment of the present invention.
FIG. 3 is a block diagram for describing a configuration of an upper-level controller that is one component of an energy storage system according to one embodiment of the present invention.
FIG. 4 is a flowchart for describing a communication method of an energy storage system according to one embodiment of the present invention.

### MODE FOR CARRYING OUT THE INVENTION

Hereinafter, embodiments of the present invention will be described in detail with reference to the accompanying drawings. However, the present invention is not limited to the embodiments disclosed below, but will be implemented in a variety of different forms. The embodiments of the present invention are only provided to allow the present invention to be complete, and to completely inform those skilled in the art of the scope of the invention.

### 1. Energy storage system performing authentication key communication according to the present invention

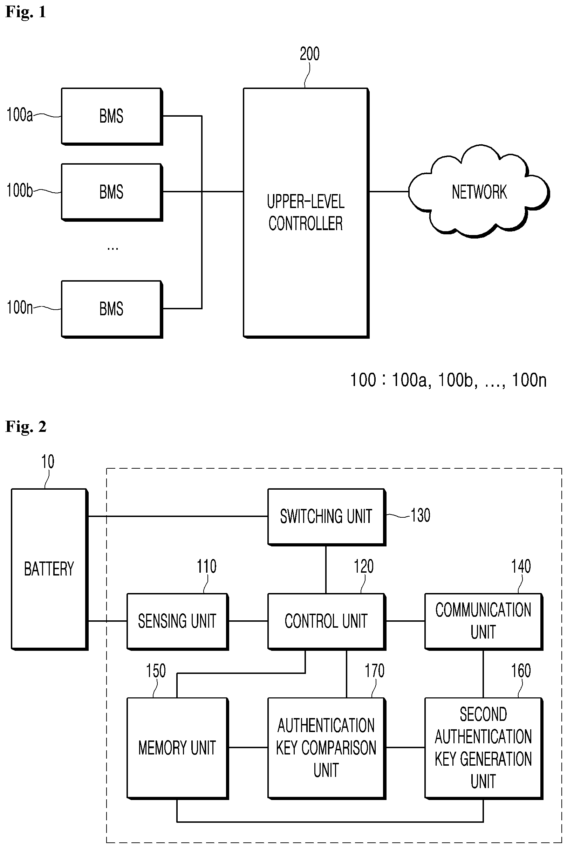

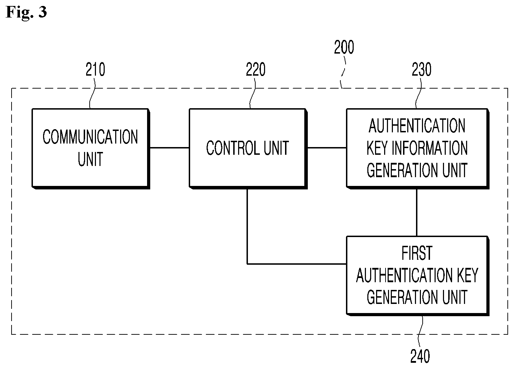

FIG. 1 is a block diagram for describing a configuration of an energy storage system according to one embodiment of the present invention, FIG. 2 is a block diagram for describing a configuration of a battery management system (BMS) that is one component of an energy storage system according to one embodiment of the present invention, and FIG. 3 is a block diagram for describing a configuration of an upper-level controller that is one component of an energy storage system according to one embodiment of the present invention.

Referring to FIG. 1, the energy storage system according to one embodiment of the present invention may include a plurality of BMSs 100a, 100b, ..., 100n; 100 for managing batteries 10 and an upper-level controller 200 for controlling the batteries 10 through the plurality of BMSs 100. The upper-level controller 200 may be connected to a server and the like through a network, and the network may be a public Internet network such as a cloud service. In this energy storage system, the BMSs 100 provide information about the batteries 10 to the upper-level controller 200 and receive control commands for controlling the batteries 10 from the upper-level controller 200.

In addition, in the energy storage system according to the present invention, the upper-level controller 200 generates a first authentication key and authentication key information using the battery cell information provided from the BMS 100 and provides the first authentication key and authentication key information to the BMS 100, and the BMS 100 generates a second authentication key using the authentication key information and then determines the authenticity of the control command from the upper-level controller 200 by comparing the first and second authentication keys. In this case, when the first and second authentication keys are the same, it is determined that the control command has been transmitted from the upper-level controller 200, and when the first and second authentication keys are not the same, it is determined that the control command is false. The energy storage system according to one embodiment of the present invention will be described in more detail for each component as follows.

### (1) Battery

The battery 10 may be charged by receiving electric power, and may discharge and supply the charged electric energy to a power consumption device. That is, the battery 10 may be charged and discharged, and may be used as an energy source for a power consumption device. Here, the battery 10 may include a plurality of battery cells. Of course, the battery 10 may be a battery module, a battery rack, or a battery bank. That is, when the BMS 100 of the present invention is a module BMS, the battery 10 may be the battery module, when the BMS 100 is a rack BMS, the battery 10 may be the battery rack, and when the BMS 100 is a bank BMS, the battery 10 may be the battery bank. Accordingly, the battery 10 may be the battery module in which a plurality of battery cells are bundled, the battery rack in which a plurality of battery modules are bundled, or the battery bank in which a plurality of battery racks are bundled. Meanwhile, the plurality of battery cell, which are basic components of the battery 10, may be connected in series and/or parallel in various ways. Of course, a plurality of battery modules each including a plurality of battery cells may also be connected in series and/or parallel. Here, the battery cell may include a lithium-ion battery. However, battery cells may be made up of not only lithium-ion batteries, but also lithium-polymer batteries, nickel-cadmium batteries, nickel-hydrogen batteries, and nickel-zinc batteries.

### (2) Battery management system (BMS)

The BMS 100 estimates a state of the battery 10 and manages the battery 10 using the estimated state information. For example, the BMS 100 measures the state of the battery 10, such as voltage, current, and temperature, and estimates the state of charge (SOC), the state of health (SOH), and the state of power (SOP) using state information. SOC represents the remaining capacity of the battery, and accurate prediction of SOC makes it possible to predict future driving distance. SOH represents the capacity of the battery, which means an aging state of the battery, and affects the number of times the battery is charged and discharged. SOP means the maximum power that the battery is able to support. Prediction of the maximum power helps prevent battery overcharging or heat loss. Using the state information, the BMS 100 controls charging or discharging of the battery 10. To this end, as illustrated in FIG. 2, the BMS 100 may include a sensing unit 110 for sensing the state of the battery 10, a control unit 120 for generating a control signal for controlling charging and discharging of the battery 10 according to the state of the battery 10 measured by the sensing unit 110, and a switching unit 130 for switching the connection between the battery 10 and an external power source or power consumption device to charge and discharge the battery according to the control signal from the control unit 120. In addition, the BMS 100 according to one embodiment of the present invention transmits battery cell information to the upper-level controller 200 and stores information about at least one randomly selected battery cell, that is, N battery cells. Further, the BMS 100 receives the first authentication key and the authentication key information from the upper-level controller 200, and generates an authentication key by combining the stored battery cell information and the received authentication key information. In addition, the BMS 100 compares the generated second authentication key with the received first authentication key, executes the command received from the upper-level controller 200 when the authentication keys are the same, and ignores the command received from the upper-level controller 200 when the authentication keys are not the same. To this end, the BMS 100 according to one embodiment of the present invention may include a communication unit 140 for communication with the upper-level controller 200, a memory unit 150 for storing information about the battery 10, a second authentication key generation unit 160 for generating a second authentication key, and an authentication key comparison unit 170 for comparing the first and second authentication keys. In this case, the control unit 120 determines the authenticity of the control command according to a comparison result of the authentication key comparison unit 170. That is, the control unit 120 executes the control command from the upper-level controller 200 when the first and second authentication keys are the same as a result of comparison by the authentication key comparison unit 170, and the control unit 120 determines that the control command is false when the first and second authentication keys are not the same and ignores the control command. In addition, the control unit 120 may control each of components of the BMS 100 as well as the switching unit 130 for charging and discharging the battery 10. That is, the control unit 120 may control the communication unit 140 to provide battery cell information to be provided to the upper-level controller 200, may store the battery cell information in the memory unit 150, or may execute the control command from the upper-level controller 200 according to the comparison result of the authentication key comparison unit 170. As described above, the sensing unit 110, the control unit 120, and the switching unit 130 are provided to control charging and discharging of the battery 10, and the communication unit 140, the memory unit 150, the second authentication key generation unit 160, and the authentication key comparison unit 170 are provided to generate and compare authentication keys. Ultimately, in the energy storage system (ESS) for secure communication of the present invention, the BMS 100 may include the control unit 120, the communication unit 140, the memory unit 150, the second authentication key generation unit 160, and the authentication key comparison unit 170.

Meanwhile, the BMS 100 may be a plurality of module BMS (MBMS) for each managing a predetermined number of battery modules, may be a plurality of rack BMS (RBMS) for each managing a predetermined number of module BMS (MBMS), or may be at least one bank MBS (BBMS) for each managing a predetermined number of rack BMS (RBMS). That is, in the present invention, at least one of the module BMS, rack BMS, and bank BMS may determine the authenticity of the control command from the upper-level controller 200 by generating and comparing authentication keys through communication with the upper-level controller 200.

The BMS 100 according to one embodiment of the present invention will be described in more detail for each component as follows.

### (2)-1. Sensing unit

The sensing unit 110 may be provided to sense the state of the battery 10. For example, the sensing unit 110 may sense current, voltage, temperature, and the like of the battery 10. In addition, the sensing unit 110 may sense the state of the battery module and battery cell, such as current and voltage. That is, the state of each of a plurality of battery cells may be sensed, or the state of a battery module in which a plurality of battery cells are bundled may be sensed. For this purpose, the sensing unit 110 may include a plurality of sensors. That is, the sensing unit 110 may include at least one current sensor, at least one voltage sensor, and at least one temperature sensor. The voltage sensor, the current sensor, and the temperature sensor periodically measure the voltage, current, and temperature of the battery 10 under the control of the control unit 120 and provide measurement results to the control unit 120. Here, the voltage sensor generates a signal corresponding to voltage applied between a positive electrode and a negative electrode of the battery 10 and provides it to the control unit 120. In addition, the current sensor, which is a sense resistor or Hall sensor, generates a signal corresponding to a magnitude of a charging current and provides the generated signal to the control unit 120. The current sensor may measure not only the charging current but also a magnitude of a discharging current. The temperature sensor may be a thermal coupler, for example, used to measure temperature. The temperature sensor generates a signal corresponding to the temperature of the battery 10 and provides the generated signal to the control unit 120.

### (2)-2. Control unit

The control unit 120 may control the battery 10 according to the state of the battery 10 measured by the sensing unit 110. Specifically, the control unit 120 may perform various functions such as lifespan management of the battery 10, capacity control of the battery 10, battery balancing, and the like. In addition, the control unit 120 may control charging and discharging of the battery 10 by generating a control signal according to the voltage measured from the sensing unit 110 and controlling the switching unit 130 between the battery 10 and an external power source, thereby preventing overcharging or overdischarging of battery cells. For example, the control unit 120 may compare a first set voltage for stopping a charging operation and a second set voltage for performing the charging operation with the voltage of the battery 10 measured by the sensing unit 110, generate a control signal for stopping the charging operation of the battery 10 when the measured voltage is higher than or equal to the first set voltage, and generate a control signal for the charging operation of the battery 10 when the measured voltage is lower than or equal to the second set voltage. In addition, the control unit 120 may provide battery cell information to be provided to the upper-level controller 200, perform operations according to a control command from the upper-level controller 200, and control the communication unit 140 for this purpose, that is, the control unit 120 may transmit the battery cell information to the upper-level controller 200 through the communication unit 140 and receive the control command from the upper-level controller 200 through the communication unit 140. Then, the control unit 120 selects at least one piece of battery cell information, that is, N pieces of battery cell information, from all the battery cell information, stores the selected battery cell information in the memory unit 150, and transmits, to the upper-level controller 200, number information N on the battery cells about which the battery cell information is stored. In this case, the battery cell information may include the voltage of the battery cell. In addition, the control unit 120 may determine the authenticity of the control command according to the comparison result of the authentication key comparison unit 170 comparing the first authentication key from the upper-level controller 200 with the second authentication key from the second authentication key generation unit 160 and perform the control command from the upper-level controller 200.

### (2)-3. Switching unit

The switching unit 130 may be provided to control current flow for charging or discharging of the battery 10. That is, the switching unit 130 is provided on a charging and discharging path to set the charging and discharging path. In this case, the switching unit 130 may perform charging or discharging according to a control signal of the control unit 120. This switching unit 130 may be made of a semiconductor switching element for controlling current flow for charging or discharging. For example, at least one field effect transistor (FET), relay, or the like, may be used depending on the specifications of the battery 10. As a specific example, the switching unit 130 may include a charging switch and a discharging switch, which are respectively driven according to respective control signals of the control unit 120. In this case, the charging and discharging switches may each be made of FETs.

### (2)-4. Communication unit

The communication unit 140 may be provided for communication between the BMS 100 and the upper-level controller 200. That is, the communication unit 140 may be provided to transmit battery cell information and the like from the BMS 100 to the upper-level controller 200 and receive a control command and the like from the upper-level controller 200. In addition, the communication unit 140 may receive the first authentication key and the authentication key information from the upper-level controller 200. The control command received from the upper-level controller 200 through the communication unit 140 may be transmitted to the control unit 120, the authentication key information from the upper-level controller 200 may be transmitted to the authentication key generation unit 160, and the first authentication key from the upper-level controller 200 may be transmitted to the authentication key comparison unit 170. Here, the communication unit 140 may communicate with the upper-level controller 200 by wire or wirelessly; for example, the communication unit 140 may communicate with the upper-level controller 200 using the controller area network (CAN) method or the local interconnect network (LIN) method.

### (2)-5. Memory unit

The memory unit 150 stores voltage information about any N battery cells when the battery cell information is transmitted to the upper-level controller 200. That is, the memory unit 150 may store any battery cell information selected by the control unit 120 through the control unit 120. In addition, the memory unit 150 may store information such as a unique ID of a corresponding BMS 100, and may store unique characteristic information about the battery 10 for charging and discharging operations of the battery 10. The memory unit 150 may include storage media such as a random access memory (RAM), a static RAM (SRAM), a ferro-electric RAM (FRAM), a phase-change RAM (PRAM), a magnetic RAM (MRAM), a flash memory, an electrically erasable programmable memory (EEPROM), a read-only memory (ROM), and a programmable ROM (PROM).

### (2)-6. Second authentication key generation unit

The second authentication key generation unit 160 generates a second authentication key using any battery cell information stored in the memory unit 150 and the authentication key information received from the upper-level controller 200 through the communication unit 140. In this case, the authentication key generation unit 160 may generate the second authentication key using the received authentication key information, a predetermined number of battery cell voltages, the ID of the BMS, and the like. For example, the authentication key generation unit 160 may generate the second authentication key by generating a second cell voltage sum value by adding up voltages of a predetermined number of battery cells selected from any battery cell information using the received authentication key information, adding the ID of the BMS to the second cell voltage sum value, and then performing a crc16 hash operation. In this case, the second cell voltage sum value may be generated by adding up voltages from a (P+0)^{th} battery cell to a (P+I)^{th} battery cell from the battery cell information. Here, P is any integer satisfying 0 < P ≤ _N, I is any integer satisfying 0 < P+(I+1) ≤ _N, and N is the number of the information-stored battery cells.

### (2)-7. Authentication key comparison unit

The authentication key comparison unit 170 compares the second authentication key generated in the second authentication key generation unit 160 with the first authentication key generated in the upper-level controller 200. That is, the authentication key comparison unit 170 compares the first and second authentication keys to determine whether the authentication keys are the same. The comparison result of the authentication key comparison unit 170 is transmitted to the control unit 120, and the control unit 120 performs the control command received from the upper-level controller 200 when the first and second authentication keys are the same according to the comparison result of the authentication key comparison unit 170 and ignores the control command received from the upper-level controller 200 when the first and second authentication keys are not the same. In this case, the authentication key comparison unit 170 may transmit different signals to the control unit 120 according to the comparison result of the first and second authentication keys. For example, when the first and second authentication keys are the same, a logic high signal may be transmitted to the control unit 120, and when the first and second authentication keys are not the same, a logic low signal may be transmitted to the control unit 120.

### (3) Upper-level controller

The upper-level controller 200 may be provided to control the ESS. That is, the upper-level controller 200 may be provided to control a plurality of BMSs 100. The upper-level controller 200 may transmit control commands for controlling the plurality of batteries 10 to the BMSs 100. Thereby, the operation of the BMSs 100 is controlled based on the control command received from the upper-level controller 200, and operations such as charging and discharging of the batteries 10 may be controlled accordingly. Here, the upper-level controller 200 may be a battery system controller (BSC) for controlling the ESS. In addition, the upper-level controller 200 according to one embodiment of the present invention may generate authentication key information for secure communication with the BMSs 100 and generate the first authentication key therefrom. To this end, the upper-level controller 200 periodically receives all battery cell information from the plurality of BMSs 100 and receives the number of pieces of battery cell information currently stored in each of the BMSs 100. Then, the upper-level controller 200 generates predetermined authentication key information using the number value (i.e., N value) of the information-stored battery cells and generates the first authentication key using the battery cell information and authentication key information. In addition, the upper-level controller 200 transmits the first authentication key and the authentication key information to the BMS 100.

### (3)-1. Communication unit

The communication unit 210 may be provided for communication between the upper-level controller 200 and the BMS 100. In addition, the communication unit 210 may be provided for communication between the upper-level controller 200 and a server through a network. That is, the communication unit 210 may be provided to receive battery cell information and the like from the BMS 100 and to transmit a control command and the like from the upper-level controller 200 to the BMS 100. In addition, the communication unit 210 may transmit the first authentication key and the authentication key information from the upper-level controller 200 to the BMS 100. The communication unit 210 may communicate with the BMS 100 by wire or wirelessly; for example, the communication unit 210 may communicate with the BMS 100 using the controller area network (CAN) method or the local interconnect network (LIN) method. Meanwhile, the communication unit 210 may communicate with a server (not shown) through the network, and communication using the network may use wireless communication. That is, the communication unit 210 may communicate wirelessly or wired with the BMS 100, and may communicate wirelessly with the server (not shown) through the network. Accordingly, the communication unit 210 of the upper-level controller 200 may include a wired communication unit and a wireless communication unit. Here, wireless communication using the network may use various methods, including 3G, 4G, 5G, 3^{rd} generation partnership project (3GPP), long term evolution (LTE), world interoperability for microwave access (WIMAX), Wi-Fi, Bluetooth communication, infrared communication, ultrasonic communication, visible light communication (VLC), or the like.

### (3)-2. Control unit

The control unit 220 generates control commands for controlling the plurality of BMSs 100. That is, the control unit 220 generates control commands to control operations such as charging and discharging and cell balancing of the battery 10 managed by the plurality of BMSs 100. In this case, the control unit 220 generates control commands to control the battery 10 to an optimal state using information about the battery 10 received from the plurality of BMSs 100, that is, state information such as voltage, current, and temperature of each of the battery cells. The control commands from the control unit 220 are transmitted to the plurality of BMSs 100 through the communication unit 210. In addition, the control unit 220 may store various information collected by each of the plurality of BMSs 100 on a server through a network. That is, the control unit 220 may store various data collected by the BMSs on a remote server or the like through a network by the communication unit 210 for various research and development purposes. In this case, various information collected by the plurality of BMSs 100 may be stored in the memory unit (not shown). Meanwhile, the control unit 220 of the present invention may transmit the battery cell information and the number of the information-stored battery cells received from the BMS 100 to an authentication key information generation unit 230 and a first authentication key generation unit 240 through the communication unit 210 for generation of the authentication key information and generation of the first authentication key. That is, the control unit 220 may transmits the number of information-stored battery cells to the authentication key information generation unit 230 for generation of authentication key information and transmit the battery cell information to the first authentication key generation unit 240 for generation of the first authentication key.

### (3)-3. Authentication key information generation unit

The authentication key information generation unit 230 generates predetermined authentication key information using the number value (N value) of the information-stored battery cells received from the BMS 100. That is, the authentication key information generation unit 230 receives the number value (N value) of the information-stored battery cells received through the communication unit 210 through the control unit 220 and generates predetermined authentication key information. In this case, the authentication key information incudes P that is any integer satisfying 0 < P ≤ _N and I that is any integer satisfying 0 < P+(I+1) ≤ _N, where N is the number of the information-stored battery cells.

### (3)-4. First authentication key generation unit

The first authentication key generation unit 240 generates the first authentication key using all the battery cell information received from the BMS 100 and the authentication key information received from the authentication key information generation unit 230. In this case, the first authentication key generation unit 240 may generate the first authentication key using the received authentication key information, all battery cell voltages, the ID of the BMS, and the like. For example, the first authentication key generation unit 240 may generate the first authentication key by generating a first battery cell voltage sum value by adding up voltages of a predetermined number of battery cells selected from all the battery cell information using the transmitted authentication key information, adding the ID of the BMS to the first battery cell voltage sum value, and then performing a crc16 hash operation. In this case, the first battery cell voltage sum value may be generated by adding up voltages from a (P+0)^{th} battery cell to a (P+I)^{th} battery cell from the battery cell information. Here, P is any integer satisfying 0 < P ≤ _N, I is any integer satisfying 0 < P+(I+1) ≤ _N.

As described above, in the ESS according to one embodiment of the present invention, the upper-level controller 200 generates authentication key information and a first authentication key using battery cell information provided from the BMS 100, and when the authentication key information and the first authentication key are provided to the BMS 100, the BMS 100 generates the second authentication key using the authentication key information and then determines the authenticity of the control command from the upper-level controller 200 by comparing the first and second authentication keys. In this case, when the BMS 100 provides the battery cell information to the upper-level controller 200, the BMS 100 stores battery cell voltage information about any N battery cells among all battery cells managed by the BMS 100 in the memory unit and provides the battery cell voltage information to the upper-level controller 200, and the upper-level controller 200 generates predetermined authentication key information using the number value of the information-stored battery cells. In addition, the upper-level controller 200 generates the first authentication key using the battery cell information and the predetermined authentication key information, and the BMS 100 generates the second authentication key using the number value of the information-stored cells and the received authentication key information. In this way, the authenticity of the control command from the upper-level controller 200 is determined by comparing the first and second authentication keys generated by the upper-level controller 200 and the BMS 100, respectively, so that secure communication between the BMS 100 and the upper-level controller 200 is possible. In addition, since secure communication may be made with a small number of operations, operations may also be conducted using a battery monitoring IC (BMIC).

### 2. Communication method of energy storage system according to the present invention

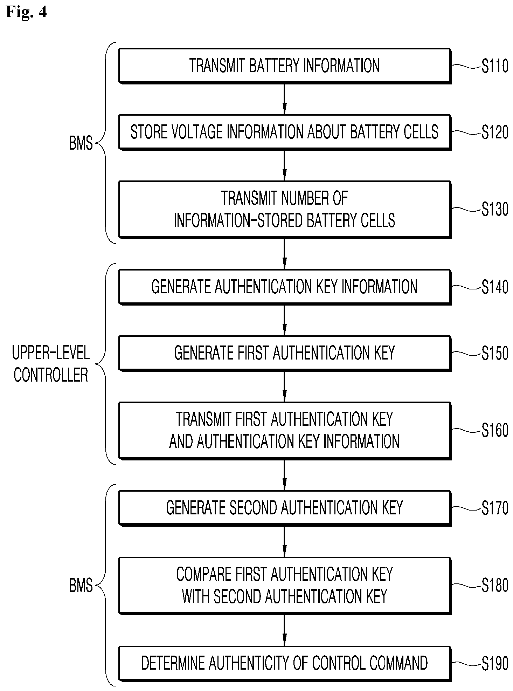

FIG. 4 is a flowchart for describing a communication method of an energy storage system according to one embodiment of the present invention.

Referring to FIG. 4, a communication method according to one embodiment of the present invention may include operation S110 of transmitting battery cell information including voltage information about all battery cells from the BMS 100 to the upper-level controller 200, operation S120 of storing voltage information about any N battery cells among all battery cells managed by the BMS 100, operation S130 of transmitting the number N of the stored battery cells to the upper-level controller 200, operation S140 of generating, by the upper-level controller 200, authentication key information using a value of the number N of the information-stored battery cells, operation S150 of generating a first authentication key using the battery cell information and the authentication key information, operation S160 of transmitting the first authentication key and the authentication key information to the BMS 100, operation S170 of generating, by the BMS 100, a second authentication key using the number N of the information-stored battery cells and the authentication key information, operation S180 of determining whether or not the first and second authentication keys match by comparing the first authentication key with the second authentication key, and operation S190 of determining the authenticity of a control command from the upper-level controller 200 according to a comparison result of the first authentication key and the second authentication key. In addition, this series of operations S110 to S190 may be repeated at a predetermined period. That is, operation S110 for battery cell information transmission, operation S120 for battery cell voltage information storage, operation S130 for information-stored battery cell number transmission, operation S140 for authentication key information generation, operation S150 for first authentication key generation, operation S160 for authentication key information and first authentication key transmission, operation S170 for second authentication key generation, operation S180 for first and second authentication key comparison, and operation S190 for control command authenticity determination may be performed at a predetermined period. In addition, the above operations may be performed sequentially one by one on a plurality of BMSs 100 managed by the upper-level controller 200, the above operations may also be performed on at least two BMSs 100, and the above operations may be performed on all the plurality of BMSs 100. A secure communication method of the ESS between the BMS 100 and the upper-level controller 200 according to one embodiment of the present invention will be described in more detail for each of the operations as follows.

S110: Information about the battery 10 managed by at least one BMS 100 among the plurality of BMSs 100 is transmitted from the corresponding BMS 100 to the upper-level controller 200. In this case, the information about the battery 10 may include information about a plurality of battery cells managed by the corresponding BMS 100. In addition, the battery cell information may include a battery cell voltage sensed by the sensing unit 110 for sensing the battery 10. That is, at least one BMS 100 among the plurality of BMSs 100 transmits battery cell information including voltage information about all battery cells to the upper-level controller 200. In this case, the battery cell information sensed by the sensing unit 210 may be transmitted to the communication unit 140 through the control unit 120, and may be transmitted to the upper-level controller 200 through the communication unit 140.

The BMS 100 may determine the number N of cells to transmit cell voltage information among the plurality of battery cells, and transmit voltage information about N battery cells to the upper-level controller 200.

The battery cell information may be transmitted to the upper-level controller 200 at a predetermined period, and the upper-level controller 200 may update the authentication key according to the predetermined period of receiving the cell information.

S120: The BMS 100 stores voltage information on any N battery cells among the plurality of battery cells managed by the BMS 100 after transmitting the battery cell information to the upper-level controller 200. That is, the BMS 100 stores voltage information on any number (that is, N) of battery cells among a plurality of battery cells in the memory unit 150. This is for use in generating the second authentication key, which will be described below. In this case, the number of the battery cells may be less than the total number of battery cells. Of course, the number of the battery cells may be equal to the total number of battery cells.

In this case, the N value, which is the number of the information-stored battery cells, may be arbitrarily determined by the BMS, and this is to allow battery cell information to be selectively stored in a data size that matches the capacity of the memory device possessed by the BMS. That is, in the present invention, the BMS may determine the number of battery cells about which information is stored by considering the amount of calculation of the BMS.

Further, in the present invention, cell voltage is used as battery cell information, and the cell voltage is data used in all BMSs, has versatility, and has high resolution (usually in units of 0.0001 V), and thus the probability of data duplication is low.

S130: The number N of the battery cells stored in the memory unit 150 is transmitted to the upper-level controller 200. That is, the number N of the battery cells about which the voltage information is stored in the memory unit 150 is transmitted to the upper-level controller 200. To this end, the control unit 120 may transmit the number N of the battery cells stored in the memory unit 150 to the upper-level controller 200 through the communication unit 140.

S 140: The upper-level controller 200 generates authentication key information using the value of the number N of the battery cells about which the cell voltage information is stored, which has been received from the BMS 100. That is, the communication unit 210 of the upper-level controller 200 communicates with the communication unit 140 of the BMS 100 to receive the value of the number N of battery cells about which the cell information is stored in the BMS 100, and the control unit 220 transmits the received value to the authentication key information generation unit 230. The authentication key information generation unit 230 generates authentication key information including any integer P satisfying 0 < P ≤ _N and any integer I satisfying 0 < P+(I+1) ≤ _N.

S150: A first authentication key is generated using the battery cell information and the authentication key information. That is, the first authentication key generation unit 240 generates the first authentication key using all the battery cell information received from the BMS 100 and the authentication key information received from the authentication key information generation unit 230. In this case, the first authentication key generation unit 240 may generate the first authentication key using the received authentication key information, all battery cell voltages, the ID of the BMS, and the like. For example, the first authentication key generation unit 240 may generate the first authentication key by generating a first battery cell voltage sum value by adding up voltages of a predetermined number of battery cells selected from all the battery cell information using the transmitted authentication key information, adding the ID of the BMS to the first battery cell voltage sum value, and then performing a crc16 hash operation. In this case, the first battery cell voltage sum value may be generated by adding up voltages from a (P+0)^{th} battery cell to a (P+I)^{th} battery cell from the battery cell information. Here, P is any integer satisfying 0 < P ≤ _N, I is any integer satisfying 0 < P+(I+1) ≤ _N.

Meanwhile, the first authentication key is regenerated or updated every period that conforms to a transmission period of the battery cell information transmitted from the BMS 100 to the upper-level controller 200.

S160: The upper-level controller 200 transmits the first authentication key and the authentication key information to the BMS 100. That is, the control unit 220 receives the authentication key information from the authentication key information generation unit 230, receives the first authentication key from the first authentication key generation unit 240, and transmits the first authentication key to the BMS 100 through the communication unit 210.

S170: The BMS 100 generates a second authentication key using the number N of battery cells about which the battery cell information is stored and the received authentication key information. That is, the second authentication key generation unit 160 generates the second authentication key using any battery cell information stored in the memory unit 150 and the authentication key information received from the upper-level controller 200 through the communication unit 140. In this case, the authentication key generation unit 160 may generate the second authentication key using the received authentication key information, a predetermined number of battery cell voltages, the ID of the BMS itself, and the like. For example, the authentication key generation unit 160 may generate the second authentication key by generating a second cell voltage sum value by adding up voltages of a predetermined number of battery cells selected from any battery cell information using the received authentication key information, adding the ID of the BMS itself to the second cell voltage sum value, and then performing a crc16 hash operation. In this case, the second cell voltage sum value may be generated by adding up voltages from a (P+0)^{th} battery cell to a (P+I)^{th} battery cell from the battery cell information. Here, P is any integer satisfying 0 < P ≤ _N, I is any integer satisfying 0 < P+(I+1) ≤ _N, and N is the number of the information-stored battery cells.

As such, since the authentication key of the present invention does not simply generate the authentication key using the cell voltage value, but uses the sum value of the cell voltages and includes the ID of the BMS therein, the BMS that has received the control command is able to accurately distinguish a control command targeting itself as a recipient, thereby improving security compared to using cell voltage values, which are normal data, as they are to generate the authentication key. In addition, when the control command is later confirmed by the BMS, only P+I addition and one hash operation need to be performed without the need to decrypt the entire data, and thus the amount of calculation is reduced compared to the encryption/decryption method in the related art.

S180: The first authentication key and the second authentication key are compared with each other to determine whether the first and second authentication keys match. That is, the authentication key comparison unit 170 determine whether the first and second authentication keys are the same by comparing the second authentication key generated in the second authentication key generation unit 160 with the first authentication key generated from the upper-level controller 200. In this case, the authentication key comparison unit 170 may transmit different signals to the control unit 120 according to the comparison result of the first and second authentication keys. For example, when the first and second authentication keys are the same, a logic high signal may be transmitted to the control unit 120, and when the first and second authentication keys are not the same, a logic low signal may be transmitted to the control unit 120.

S190: The authenticity of the control command from the upper-level controller 200 is determined according to a comparison result of the first and second authentication keys. A determination result of the authentication key comparison unit 170 is transmitted to the control unit 120, and the control unit 120 performs the control command received from the upper-level controller 200 when the first and second authentication keys are the same according to the determination result of the authentication key comparison unit 170 and ignores the control command received from the upper-level controller 200 when the first and second authentication keys are not the same.

### <Example>

When the number of cells connected to a BMS with an ID 3 is 5 and the cell voltages are as follows, an embodiment of authentication key generation in the present invention will be described.

Voltage value of each cell (unit 0.0001 V):

| | |
|---|---|
| Cell 1: 31234 | Cell 2: 32345 |
| Cell 3: 33456 | Cell 4: 35678 |
| Cell 5: 37890 | |

The BMS determines a predetermined N value. In the present embodiment, N = 4, and accordingly, the BMS stores data for cells 1 to 4 in a BMS memory and transmits all cell data to an upper-level controller.

The upper-level controller determines predetermined P and I values (P; 2, I: 3 in the present embodiment), and calculates a value (101479 + 3 = 101482) obtained by adding the BMS ID to the sum of the first cell voltages (Cell 2 + Cell 3 + Cell 4) from the received data.

Then, the upper-level controller generates, as a first authentication key, a value obtained by performing a hash operation on the value obtained by adding the BMS ID to the sum of the first cell voltages, and the BMS also generates a second authentication key in this way and determines the authenticity of a control command from the upper-level controller by comparing the received first authentication key with the generated second authentication key.

Meanwhile, although the technical spirit of the present invention as described above has been specifically described according to the above embodiments, it should be noted that the above embodiments are for explanation and not for limitation. In addition, those skilled in the art will understand that various embodiments are possible within the scope of the technical spirit of the present invention.

The names of the drawing symbols used in the present invention are as follows.

| | | | |
|---|---|---|---|
| 10: | Battery | 100: | BMS |
| 200: | Upper-level controller | 110: | Sensing unit |
| 120: | Control unit | 130: | Switching unit |
| 140: | Communication unit | 150: | Memory unit |
| 160: | Second authentication key generation unit | 170: | Authentication key comparison unit |
| 210: | Communication unit | 220: | Control unit |
| 230: | Authentication key information generation unit | 240: | First authentication key generation unit. |

## Claims

1. An energy storage system comprising:
a plurality of BMS each managing a plurality of battery cells; and
an upper-level controller transmitting a predetermined control command to the plurality of BMSs,
wherein the upper-level controller generates authentication key information and a first authentication key using battery cell information provided from the BMSs, and
the BMS receives the authentication key information and the first authentication key from the upper-level controller, generates a second authentication key using the authentication key information, and then determines authenticity of a control command from the upper-level controller by comparing the first and second authentication keys.

2. The energy storage system of claim 1, wherein the BMS determines a number N of battery cells to transmit battery cell information among all battery cells managed by the BMS together with the battery cell information, and provides battery cell voltage information of the determined number N of battery cells to the upper-level controller,
the upper-level controller generates the authentication key information using the value of the determined number N of battery cells, and then generates the first authentication key using the battery cell information and the authentication key information, and
the BMS generates the second authentication key using the determined number N of battery cells, and the received authentication key information.

3. The energy storage system of claim 2, wherein the upper-level controller comprises:
a communication unit that receives voltage information about the N battery cells controlled by at least one BMS among the plurality of BMSs and transmits the generated authentication key information and first authentication key to the BMS;
an authentication key information generation unit that generates the authentication key information from the number N of the battery cells and the received battery cell information; and
a first authentication key generation unit that generates the first authentication key using the battery cell information and the authentication key information.

4. The energy storage system of claim 3, wherein the authentication key information generation unit generates the authentication key information including any integer P satisfying 0 < P ≤ _N and any integer I satisfying 0 < P+(I+1) ≤ _N.

5. The energy storage system of claim 3, wherein the first authentication key generation unit generates the first authentication key by generating a first battery cell voltage sum value by adding up voltages of a predetermined number of battery cells selected from all battery cell information using the authentication key information, adding an ID of the BMS to the first battery cell voltage sum value, and then performing a hash operation.

6. The energy storage system of claim 5, wherein the first battery cell voltage sum value is generated by adding up voltages from a P+0th battery cell to a P+Ith battery cell from the battery cell information (here, P is any integer satisfying 0 < P ≤ _N, I is any integer satisfying 0 < P+(I+1) ≤ _N, and N is the number of battery cells about which cell information is stored).

7. The energy storage system of claim 2, wherein the BMS comprises:
a memory unit that stores voltage information about the N battery cells among all battery cells managed by the BMS;
a communication unit that transmits, to the upper-level controller, a value of the number N of the battery cells about which voltage information is stored and the battery cell information including voltage information about all battery cells managed by the BMS and receives the authentication key information and the first authentication key from the upper-level controller;
a second authentication key generation unit that generates a second authentication key using the authentication key information and the value of the number N of battery cells of which the voltage information is stored;
an authentication key comparison unit that compares the first and second authentication keys; and
a control unit that determines the authenticity of the control command from the upper-level controller according to a comparison result of the authentication key comparison unit.

8. The energy storage system of claim 7, wherein the second authentication key generation unit generates the second authentication key by generating a second cell voltage sum value by adding up voltages of a predetermined number of battery cells selected from t he stored battery cell information using the authentication key information, adding an ID of the BMS to the second cell voltage sum value, and then performing a hash operation.

9. The energy storage system of claim 8, wherein the second cell voltage sum value is generated by adding up voltages from a P+0th battery cell to a P+Ith battery cell from the battery cell information (here, P is any integer satisfying 0 < P ≤ _N, I is any integer satisfying 0 < P+(I+1) ≤ _N, and N is the number of battery cells of which the battery cell information is stored).

10. A communication method of an energy storage system, the communication method comprising:
receiving, by an upper-level controller, battery cell information including battery cell voltage information from a BMS;
generating, by the upper-level controller, authentication key information and a first authentication key using the battery cell information;
receiving, by the BMS, the authentication key information from the upper-level controller to generate a second authentication key and comparing the second authentication key with the first authentication key; and
performing, by the BMS, a control command from the upper-level controller according to a comparison result of the first authentication key and the second authentication key.

11. The communication method of claim 10, wherein the authentication key information includes any integer P satisfying 0 < P ≤ _N and any integer I satisfying 0 < P+(I+1) ≤ _N.

12. The communication method of claim 10, wherein the first authentication key is generated by generating a first battery cell voltage sum value by adding up voltages of a predetermined number of battery cells selected from all battery cell information using the authentication key information, adding an ID of the BMS to the first battery cell voltage sum value, and then performing a hash operation.

13. The communication method of claim 12, wherein the first battery cell voltage sum value is generated by adding up voltages from a P+0th battery cell to a P+Ith battery cell from the battery cell information (here, P is any integer satisfying 0 < P ≤ _N, I is any integer satisfying 0 < P+(I+1) ≤ _N, and N is the number of battery cells of which the battery cell information is stored).

14. The communication method of claim 10, wherein the second authentication key is generated by generating a second cell voltage sum value by adding up voltages of a predetermined number of battery cells selected from any battery cell information using the authentication key information, adding an ID of the BMS to the second cell voltage sum value, and then performing a hash operation.

15. The communication method of claim 14, wherein the second cell voltage sum value is generated by adding up voltages from a P+0th battery cell to a P+Ith battery cell from the battery cell information (here, P is any integer satisfying 0 < P ≤ _N, I is any integer satisfying 0 < P+(I+1) ≤ _N, and N is the number of battery cells about which cell information is stored).

16. A communication method of an energy storage system, the communication method comprising:
transmitting battery cell information including voltage information about all battery cells from a BMS to an upper-level controller;
storing voltage information about any N battery cells among all battery cells managed by the BMS;
transmitting the number N of the battery cells to the upper-level controller;
generating, by the upper-level controller, authentication key information using a value of the number N of the battery cells about which the voltage information is stored;
generating a first authentication key using the battery cell information and the authentication key information;
transmitting the first authentication key and the authentication key information to the BMS;
generating, by the BMS, a second authentication key using the number N of the battery cells about which the voltage information is stored and the authentication key information; and
determining authenticity of a control command from the upper-level controller by comparing the first authentication key with the second authentication key.
